# EUROPÄISCHE PATENTSCHRIFT

(11) **EP 2 864 075 B1**
(45) Veröffentlichungstag und Bekanntmachung des Hinweises auf die Patenterteilung: **08.03.2017**
(21) Anmeldenummer: 13730488.7
(22) Anmeldetag: 17.06.2013
(51) Int. Cl.: B23F 23/04, B21H 5/02, B21H 5/04, B23F 17/00, B23F 19/10

(54) **VERFAHREN ZUM BEARBEITEN EINES WERKSTÜCKS UND DAZU GEEIGNETE VERZAHNUNGSMASCHINE**
METHOD FOR PROCESSING A WORKPIECE AND CORRESPONDING GEAR CUTTING MACHINE
PROCÉDÉ DE TRAITEMENT D'UNE PIÈCE ET MACHINE À TAILLER LES ENGRENAGES CORRESPONDANTE

(30) Priorität: 25.06.2012 DE 102012012559
(43) Veröffentlichungstag der Anmeldung: 29.04.2015
(73) Patentinhaber: Gleason-Pfauter Maschinenfabrik GmbH, 71636 Ludwigsburg (DE)
(72) Erfinder: KREBSER, Gerhard, 71563 Affalterbach (DE)
(74) Vertreter: Leinweber & Zimmermann
(86) Internationale Anmeldenummer: PCT/EP2013/001789
(87) Internationale Veröffentlichungsnummer: WO 2014/000870

(56) Entgegenhaltungen:
- EP-B1- 2 066 473
- WO-A2-2010/079113
- NYAMAGOUDAR B: "CHAMFERING AND DEBURRING EXTERNAL PARALLEL AXIS GEARS", GEAR TECHNOLOGY, RANDALL PUBLISHING CO. ELK GROVE, ILLINOIS, US, Bd. 13, Nr. 6, 1. November 1996 (1996-11-01), Seiten 25-31, XP000691319, ISSN: 0743-6858

## Beschreibung

Die Erfindung betrifft ein Verfahren zum Bearbeiten eines Werkstücks, bei dem eine endseitige Zahnkante einer durch in spanabhebender Bearbeitung erzeugten Verzahnung des Werkstücks durch plastisches Umformen an einem ersten Ort in eine Fase umgearbeitet wird, wobei durch das bei der Umarbeitung zur Stirnseite der Verzahnung hin verdrängte Material ein stirnseitiger Materialaufwurf und durch das zur Zahnflanke der Verzahnung hin verdrängte Material ein flankenseitiger Materialaufwurf entsteht, und bei dem man den entstandenen stirnseitigen und flankenseitigen Materialaufwurf beseitigt, sowie eine dazu geeignete und gesteuerte Verzahnungsmaschine.

Derartige Verfahren sind bekannt, beispielsweise aus der EP 1 270 127 A1. So ist aus vielerlei Gründen der sich bei der spanenden Herstellung von Verzahnungen an den endseitigen Zahnkanten entstehende Grat zu beseitigen. Diese sind dem Fachmann bekannt und beispielsweise in der DE 10 2009 018 405 A1 in den einleitenden Beschreibungsabsätzen zusammengefasst, auf die hierbei Bezug genommen wird. Doch auch die bei der plastischen Umformung der Zahnkante entstehenden Materialaufwürfe, in der Literatur auch als Sekundärgrate bezeichnet, erweisen sich als nachteilhaft für die weitere Bearbeitung der Verzahnung, und werden daher üblicherweise ebenfalls beseitigt.

Dazu wird beispielsweise in der EP 1 270 127 A1 vorgeschlagen, den flankenseitigen Materialaufwurf (flankenseitigen Sekundärgrat) durch Nachdrücken glattzuwalzen. In der DE 10 2009 018 405 A1 wird dagegen vorgeschlagen, die Beseitigung des flankenseitigen Sekundergrates durch eine von einem Zahneingriff hervorgerufene Schneidbewegung einer auf einer Zahnflanke eines Werkzeugrades ausgebildeten Schneidkante zu beseitigen.

Hinsichtlich der Werkzeuge für das plastische Umformen der Zahnkante in eine Fase sind desweiteren Werkzeuge und Abläufe bekannt geworden, bei deren Einsatz die Beseitigung des bei der Umarbeitung entstandenen stirnseitigen Materialaufwurfs (stirnseitigen Sekundergrats) zeitgleich zu dieser Umarbeitung selbst erfolgen kann, d.h. eine Anfas-Scheibe und ein Schneidwerkzeug können gemeinsam, insbesondere als integrierte Werkzeuge eingesetzt werden. Durch solche, beispielsweise in der EP 2 066 473 B1 offenbarte integrierte Werkzeuge kann nicht nur der Aufbau der Werkzeugmaschine vereinfacht werden, sondern auch die Gesamtbearbeitungszeit des Werkstücks verringert werden.

Der Erfindung liegt die Aufgabe zugrunde, eine hohe Oberflächengüte der Zahnflanken insbesondere im Bereich um die Zahnkanten bereitzustellen, die durch das eingangs erläuterte Verfahren umgearbeitet werden.

Diese Aufgabe wird von der Erfindung in verfahrensmäßiger Hinsicht durch eine Weiterbildung des Bearbeitungsverfahrens der eingangs genannten Art erreicht, die im wesentlichen dadurch gekennzeichnet ist, dass man das den stirnseitigen Materialaufwurf noch aufweisende Werkstück einen Ortswechsel zu einem zweiten Ort hin erfahren lässt, an dem die Beseitigung des flankenseitigen Materialaufwurfs erfolgt.

Aufgrund dieser erfindungsgemäßen Verfahrensführung verlässt das Werkstück den ersten Ort zwar mit bereits in eine Fase umgearbeitete Zahnkante, aber noch mit den dabei erzeugten stirn- und flankenseitigen Materialaufwürfen (Sekundärgraten). Im Rahmen der Erfindung ist nämlich erkannt worden, dass bei der eine kurze Verweilzeit des Werkstücks am ersten Ort sicherstellenden gleichzeitigen Umarbeitung der Zahnkante in die Fase und dem Abschneiden des stirnseitigen Materialaufwurfs die Gefahr besteht, dass bereits ansatzweise kaltverfestigtes, von der Stirnseite abgeschnittenes Material zahnflankenseitig in den Bearbeitungsbereich des Umarbeitungswerkzeuges gelangt und dadurch an einigen Stellen in die kaltverfestigte teilangefaste Flankenkante eingedrückt wird und sich in Folge dessen die Oberflächengüte der Zahnflanke an diesen Stellen verschlechtert.

Bei der erfindungsgemäßen Verfahrensführung ist diese Gefahr vollständig ausgeräumt, da die Umformung der Zahnkante in die Fase bereits abgeschlossen ist, bevor die stirnseitigen Materialaufwürfe beseitigt werden. Zugleich kann das Werkstück den ersten Ort rasch zur weiteren Bearbeitung verlassen.

Desweiteren wird durch das erfindungsgemäße Verfahren die Grundvoraussetzung dafür geschaffen, dass an dem ersten Ort der Umarbeitung der Zahnkante nicht zwangsweise ein Spänefluss auftritt, der insbesondere bei vertikalen Werkstückachsen durchaus aufwendige Maßnahmen zur Spanabfuhr erfordert.

Die hierin verwendeten Ausdrücke "verzahnt" und "Verzahnung" bezeichnen beliebige Außen- oder Innenverzahnungen. Insbesondere können die Verzahnungen zylindrisch oder kegelförmig sein.

Hinsichtlich der Beseitigung des flankenseitigen Materialaufwurfs sind mehrere Möglichkeiten denkbar, besonders bevorzugt erfolgt sie durch einen spanenden Bearbeitungseingriff eines Bearbeitungswerkzeuges.

Grundsätzlich kann das Verfahren für bereits mit der die umzuarbeitende Zahnkante aufweisenden Verzahnung versehenen Werkstücke angewendet werden. Die Erzeugung dieser Verzahnung selbst aus einem Werkstückrohling oder einem vorverzahnten Werkstück kann jedoch selbst ein vorgelagerter Verfahrensschritt des Verfahrens sein. Dabei ist insbesondere vorgesehen, dass die Erzeugung der Verzahnung mit der umzuarbeitenden Zahnkante an einem dritten Ort erfolgt, der insbesondere mit dem zweiten Ort übereinstimmt.

Soweit der dritte Ort nicht mit dem zweiten Ort übereinstimmt, welcher selbst von dem ersten Ort verschieden ist, ist der dritte Ort dennoch bevorzugt ein vom ersten Ort verschiedener Ort. Dadurch werden die Voraussetzungen geschaffen, auch mehrere Werkstücke parallel bearbeiten zu können.

In einer besonders bevorzugten Verfahrensgestaltung erfolgt die Erzeugung der Verzahnung mit der umzuarbeitenden Zahnkante durch spanenden Bearbeitungseingriff insbesondere der gleichen Art wie der des Bearbeitungseingriffes zur Beseitigung des flankenseitigen Materialaufwurfs und insbesondere mit dem gleichen Bearbeitungswerkzeug. Das bedeutet, wenn z.B. die Verzahnung des Werkstücks durch Wälzfräsen mit den dazu erforderlichen Maschinenachsen und Maschinenachseinstellungen erzeugt wird, werden für die Beseitigung des flankenseitigen Materialaufwurfs ebenfalls die Maschinenachsen und deren Einstellungen für das Wälzfräsen herangezogen. Das Werkzeug selbst könnte unterschiedlich sein, so dass die Erzeugung der Verzahnung mit der umzuarbeitenden Zahnkante durch ein Grobbearbeitungswerkzeug und die Beseitigung des flankenseitigen Materialaufwurfs durch ein Feinbearbeitungswerkzeug erfolgt. In einer besonders einfachen Ausgestaltung wird jedoch das gleiche Bearbeitungswerkzeug herangezogen.

Dabei sind grundsätzlich zwei Verfahrensvarianten denkbar. In einer ersten Verfahrensvariante stellt man bei der erzeugten Verzahnung mit der umzuarbeitenden Zahnkante bereits auf die durch diese Bearbeitungsart gewünschte Geometrie der Zahnflanken ab, so dass bei der Beseitigung des flankenseitigen Materialaufwurfs im wesentlichen nur noch dieser beseitigt wird und im übrigen Zahnflankenbereich keine spanabhebende Bearbeitung mehr erfolgt. Die Zustelltiefe bei der Beseitigung des flankenseitigen Materialaufwurfs wird somit gleich der tiefsten Zustellung bei der Erzeugung der Verzahnung mit der zu bearbeitenden Zahnkante eingestellt.

In einer anderen Verfahrensvariante wird dagegen die Zustelltiefe bei der Beseitigung des flankenseitigen Materialaufwurfs tiefer als die tiefste Zustellung bei der Erzeugung der Verzahnung der zu bearbeitenden Zahnkante eingestellt. Somit wird nach der Erzeugung der Verzahnung mit der umzuarbeitenden Zahnkante noch Material von der gesamten Zahnflanke abgenommen, beispielsweise in Form eines Feinbearbeitungsschrittes. Dabei entsteht kein weitergehender, eine erneute Kantenbearbeitung erforderlich machender Primärgrat mehr.

Mehrere Arten der spanabhebenden Bearbeitung zur Erzeugung der die umzuarbeitenden Zahnkante aufweisenden Verzahnung sind denkbar. Besonders bevorzugt ist jedoch an das Wälzfräsen gedacht, das sich durch niedrige Bearbeitungszeiten auszeichnet, insbesondere wenn das Verfahren bei der parallelen Bearbeitung zweier oder mehrerer Werkstücke zum Einsatz kommt.

Um die Menge des der plastischen Umformung bei der Umarbeitung der Zahnkante unterworfenen Materials gering zu halten, wird in einer bevorzugten Verfahrensvariante wenigstens an einer der Aufspannung zugewandten, insbesondere unteren Stirnseite der erzeugten Verzahnung noch vor der Umarbeitung der Zahnkante und insbesondere am dritten Ort Material abgenommen. Insbesondere bei vertikaler Orientierung der Werkstückdrehachse wird es bevorzugt, wenigstens an der unteren Stirnseite axial über die Stirnseite herausragendes Material noch vor der Umbearbeitung der Zahnkante zu entfernen. Je nach konstruktiver Gestaltung der Maschine könnte man dies auch an der oberen Stirnseite tun, oder man verzichtet aufgrund des im Vergleich zur unteren Planseite geringeren Effekts zugunsten größerer Gestaltungsmöglichkeiten bei der konstruktiven Umsetzung des Verfahrens auf diese vorherige Materialentfernung an der oberen Stirnseite. Die Materialabnahme kann dabei durch ein schneidendes Abschälen erfolgen, bei dem das eingesetzte Schneidwerkzeug nicht selbst angetrieben wird. Andererseits kann auch daran gedacht werden, viele kleine geometrisch definierte Schneiden an dem Schneidwerkzeug anzubringen und dieses anzutreiben.

Dieselben, gleichartig gestaltete oder ähnliche Bearbeitungswerkzeuge können auch für die Beseitigung des stirnseitigen Materialaufwurfes herangezogen werden. So ist einer Verfahrensgestaltung vorgesehen, dass die Beseitigung des stirnseitigen Materialaufwurfs wenigstens an einer Stirnseite an dem zweiten Ort erfolgt, insbesondere durch schneidendes Abschälen oder durch ein angetriebenes stirnfräserartiges Schneidwerkzeug. Bei einer entsprechenden Bearbeitung an beiden Stirnseiten gelingt somit ein Sammeln aller in diesem Bearbeitungsschritt erzeugten Späne an dem zweiten Ort. Schneidet man nur an beispielsweise der unteren Stirnseite (bei vertikaler Werkstückdrehachse), gelingt wenigstens teilweise die Sammlung der bei der Beseitigung des stirnseitigen Materialaufwurfs entstandener Späne am zweiten Ort. Wenn der zweite Ort und der dritte Ort übereinstimmen, gelingt auf diese Weise eine überwiegende oder sogar vollständige Konzentration der entstandenen Späne am zweiten Ort, wodurch konstruktive Maßnahmen zur Spanabfuhr vereinfacht werden.

In einem weitergehenden bevorzugten Verfahrensschritt wird vorgesehen, das Werkstück mit dem beseitigten flankenseitigen Materialaufwurf einen Ortwechsel hin zu einem vierten Ort erfahren zu lassen, an das Werkstück entnommen wird. Dies kann vorteilhaft sein, wenn an dem zweiten Ort nicht ausreichend Platz für den Zugriff eines Werkstückwechslers vorgesehen ist, oder wenn ohnehin der Werkstückwechsel an einem anderen Ort erfolgen soll, insbesondere für eine geeignete Gestaltung einer Parallelbearbeitung mehrerer Werkstücke. Nach Entnahme des Werkstückes, umfassend dessen Abspannen von der zugehörigen Werkstückspindel, kann auf diese Werkstückspindel ein neues Werkstück aufgespannt werden.

In einer weiteren Verfahrensgestaltung kann vorgesehen werden, die Beseitigung des stirnseitigen Materialaufwurfes wenigstens an einer Stirnseite, insbesondere an beiden Stirnseiten an dem vierten Ort erfolgen zu lassen, insbesondere als letzte Bearbeitung vor der Werkstückentnahme. Dadurch werden mehr Freiräume zur Gestaltung und Anordnung der Bearbeitungswerkzeuge sowie deren Trägerstrukturen am zweiten Ort geschaffen. Insbesondere kann, selbst wenn ein zur Beseitigung der stirnseitigen Materialaufwürfe geeignetes Bearbeitungswerkzeug am zweiten Ort vorgesehen ist, um axiale Überstände vor der Umarbeitung der Zahnkante zu entfernen, in einer ebenfalls als vorteilhaft angesehenen Verfahrensvariante die Beseitigung der stirnseitigen Materialaufwürfe nicht von diesen Werkzeugen vorgenommen werden, sondern (von anderen geeigneten Bearbeitungswerkzeugen) am vierten Ort. Auf diese Weise werden Rückwirkungen auf das Bearbeitungswerkzeug aufgrund der damit vorgenommenen Entfernung der axialen Überstände vor Fasenausbildung nicht von diesem wieder auf das Werkstück mit bereits umgearbeiteter Fase zurückübertragen, wodurch die Oberflächengüte des Werkstücks im Bereich der Fase weiter erhöht wird. Als Bearbeitungswerkzeug kann z.B. wieder ein schneidendes Abschälwerkzeug oder auch ein angetriebenes stirnfräserartiges Schneidwerkzeug verwendet werden.

Weiter oben wurde bereits angedeutet, dass sich das erfindungsgemäße Verfahren besonders gut für eine parallele Bearbeitung mehrerer Werkstücke eignet. So kann insbesondere vorgesehen werden, dass parallel zur am ersten Ort erfolgenden Umarbeitung der Zahnkante des (bislang betrachteten alleinigen) Werkstückes an einem weiteren Werkstück eine Verzahnung mit umzuarbeitender Zahnkante an dem dritten Ort erzeugt wird.

Zudem können an dem weiteren Werkstück insbesondere an den gleichen Orten zeitversetzt die gleichen Bearbeitungsschritte durchgeführt werden wie bei dem (bislang betrachteten alleinigen) Werkstück, und insbesondere ein nochmals weiteres Werkstück an dem vierten Ort der Bearbeitung zugeführt werden, während das weitere Werkstück an dem zweiten Ort ist.

Ist beispielsweise der dritte Ort von dem zweiten Ort verschieden und der vierte Ort von dem ersten Ort verschieden, so würde eine entsprechende Verzahnungsmaschine wenigstens vier Werkstückspindeln aufweisen und wenigstens vier Werkstücke parallel bearbeiten können. So könnte man beispielsweise ein erstes Werkstück in Form eines Rohlings in einer Werkstückwechselposition (vierter Ort) auf eine Werkstückspindel aufspannen. Diese Werkstückspindel wird durch eine geeignete Verstellbewegung ihres Trägers in eine Vorfräsposition (entspricht dem dritten Ort) gebracht, in welcher beispielsweise durch Wälzfräsen die die umzuarbeitende Zahnkante aufweisende Verzahnung erzeugt wird. Daraufhin wird das erste Werkstück an eine Anfas-Station gebracht (entspricht dem ersten Ort), an dem die Umarbeitung der Zahnkante erfolgt. Das erste Werkstück verlässt die Anfas-Station noch mit stirnseitigem Materialaufwurf und wird in eine Feinfräs-Station (entspricht dem zweiten Ort) gebracht, in der beispielsweise ein weiterer Wälzfräser ein Feinfräsen vornimmt und in diesem Feinfräsarbeitsgang auch die flankenseitigen Materialaufwürfe beseitigt. Aus der Feinfrässtation wird das Werkstück danach wieder in die Werkstückwechselposition gebracht, in der es entnommen und ein neues Werkstück auf die Werkstückspindel aufgespannt wird.

Bei dieser Verfahrensgestaltung kann ein zweites Werkstück in der Werkstückwechselposition auf eine insbesondere von demselben Träger getragene zweite Werkstückspindel aufgespannt werden, während das erste Werkstück vorgefräst wird. Während sich das erste Werkstück in der Anfas-Position befindet, wird das zweite Werkstück in der VorfräsPosition vorgefräst und ein drittes Werkstück in der Werkstückwechselposition auf eine dritte Werkstückspindel aufgespannt. Beim Feinfräsen des ersten Werkstückes in der Feinfräsposition befindet sich das zweite Werkstück in der Anfas-Position, das dritte Werkstück wird vorgefräst und ein viertes Werkstück wird in der Werkstückwechselposition auf eine vierte Werkstückspindel aufgespannt. Bei dieser Variante der Verfahrensführung mit vier Werkstückspindeln erfolgt die Beseitigung der stirnseitigen Materialaufwürfe entweder in der Feinfräsposition (am zweiten Ort) oder in der Werkstückwechselposition vor der Werkzeugentnahme (am vierten Ort).

Führt man das erfindungsgemäße Verfahren einer Parallelbearbeitung unter Verwendung von beispielsweise zwei Werkstückspindeln aus, so lässt man den dritten Ort mit dem zweiten Ort und den vierten Ort mit dem ersten Ort zusammenfallen und erhält eine Bearbeitungsposition, in welcher die Verzahnung mit der umzuarbeitenden Zahnkante z.B. durch einen Wälzfräser erzeugt wird und an der die Entfernung der flankenseitigen Materialaufwürfe erfolgt. In der anderen Bearbeitungsposition erfolgt die Umarbeitung der Zahnkante in eine Fase sowie der Werkstückwechsel. Jedes zu bearbeitende Werkstück wird somit zweimal aus der Werkstückwechselposition in die Fräsposition und wieder zurück gebracht, bevor es durch ein neu aufzuspannendes Werkstück ersetzt wird. Nimmt man bei dieser Variante das Beseitigen der stirnseitigen Materialaufwürfe ausschließlich in der Fräsposition vor, fallen in der Werkstückwechselposition keine Späne an. Aus den oben erläuterten Gründen kann es jedoch vorteilhaft sein, die Beseitigung der stirnseitigen Materialaufwürfe dennoch in der Werkstückwechselposition und vor der Werkstückentnahme vorzunehmen. Diese Verfahrensgestaltung wird besonders bevorzugt, da sich der konstruktive Aufwand für die Verzahnungsmaschine verringert (nur zwei Werkstückspindeln).

In diesem Zusammenhang kann vorgesehen werden, dass sich an dem mit dem ersten Ort zusammenfallenden vierten Ort ein von einer der Werkstückentnahme und/oder -zuführung eines neuen Werkstückes dienenden Einrichtung genutzter Raum mit dem von einer dem Beseitigen stirnseitiger Materialaufwürfe dienenden Einrichtung genutzten Raum überlappen. Dies kann etwa dadurch erfolgen, dass ein nicht mit einem Träger der Werkstückspindelachsen verbundenes Werkzeug zu einer Relativbewegung gegenüber dem an diesem Ort angeordneten Werkstück ausgelegt ist, zum Beseitigen der stirnseitigen Materialaufwürfe in eine Bearbeitungsstellung gefahren und anschließend in eine zurückgezogene Stellung zurückgezogen wird, um Raum für den Zugriff eines vorgesehenen Werkstückwechslers zu schaffen.

In vorrichtungstechnischer Hinsicht stellt die Erfindung bereit: eine Verzahnungsmaschine zum Erzeugen und/oder Bearbeiten von Verzahnungen, mit einem zwischen wenigstens zwei Stellungen beweglichen Träger für wenigstens eine darauf drehend antreibbar gelagerte Werkstückspindel, einer Einrichtung zum Umarbeiten einer endseitigen Zahnkante der Verzahnung eines auf der Werkstückspindel aufgespannten und an einem durch eine von dem Träger eingenommene Stellung definierten Ort angeordneten Werkstückes, und einer wenigstens die Bewegung des Trägers steuernden Steuervorrichtung, wobei die Steuervorrichtung den Träger zur Bewegung in eine andere Stellung steuert, wenn das Werkstück noch den bei der Umarbeitung durch Materialverdrängung zur Stirnfläche der Verzahnung hin entstandenen stirnseitigen Materialaufwurf aufweist.

Die Vorteile der erfindungsgemäßen Maschine ergeben sich aus den oben erläuterten Vorteilen des erfindungsgemäßen Verfahrens. Insbesondere ist vorgesehen, dass die Verzahnungsmaschine eine drehend angetriebene Werkzeugspindel zur Aufnahme eines Bearbeitungswerkzeuges, insbesondere eines Wälzfräsers aufweist, zur spanenden Erzeugung der Verzahnung an dem aufgespannten, an einem durch eine/die andere von dem Träger eingenommene Stellung definierten Ort angeordneten Werkstückes.

Desweiteren kann die Maschine eine Einrichtung zur Materialabtragung, insbesondere in Form eines nicht angetriebenen Abschälwerkzeuges oder eines angetriebenen stirnfräserartigen Werkzeuges, von wenigstens einer, oder insbesondere beiden Stirnseiten der Verzahnung an dem durch die eine und/oder die andere Trägerstellung bestimmten Ort.

Im Hinblick auf die vorteilhaft eingesetzte Parallelbearbeitung kann die Verzahnungsmaschine wenigstens eine weitere auf dem Träger drehbar antreibbar gelagerte Werkstückspindel aufweisen, wobei von zwei auf zwei Spindeln aufgespannten Werkstücken eines an einem ersten und das andere an einem zweiten Ort angeordnet ist, und ein Positionstausch beider Werkstücke durch eine Trägerbewegung, insbesonderedrehung bewirkbar ist.

In einer besonders bevorzugten Ausführungsform ist die Einrichtung zum Umarbeiten einer endseitigen Zahnkante und die Einrichtung zum Beseitigen axialer Materialüberstände und/oder der stirnseitigen Materialaufwürfe mit einer Bewegungskomponente parallel zur Werkstückdrehachse beweglich gelagert und kann (bei vertikaler Werkstückdrehachse) auf unterschiedlichen Bearbeitungshöhen arbeiten und insbesondere auch Verzahnungen von Werkstücken in Form einer Welle bearbeiten. Diese werkstückdrehachsenparallele bewegliche Lagerung eines Anfaswerkzeuges in Kombination mit einem zwei oder mehr Werkstückspindeln tragenden Drehträger wird hier auch unabhängig von der Art und Reihenfolge von Anfas- und Entgratvorgängen als eigenständig schutzwürdig offenbart.

Im übrigen ist die Steuervorrichtung der Verzahnungsmaschine dazu ausgelegt und betreibbar, die Maschine zur Durchführung eines Verfahrens nach einem der voranstehend erläuterten Verfahrensaspekte zu steuern.

Weitere Einzelheiten, Merkmale und Vorteile der Erfindung ergeben sich aus der nachfolgenden Beschreibung mit Bezug auf die beiliegenden Figuren, von denen
- Fig. 1: das erfindungsgemäße Verfahren schematisch in einer ersten Ausführungsform mit vier unterschiedlichen Bearbeitungsorten veranschaulicht, und
- Fig. 2: das erfindungsgemäße Verfahren schematisch für nur zwei Bearbeitungsorte veranschaulicht.

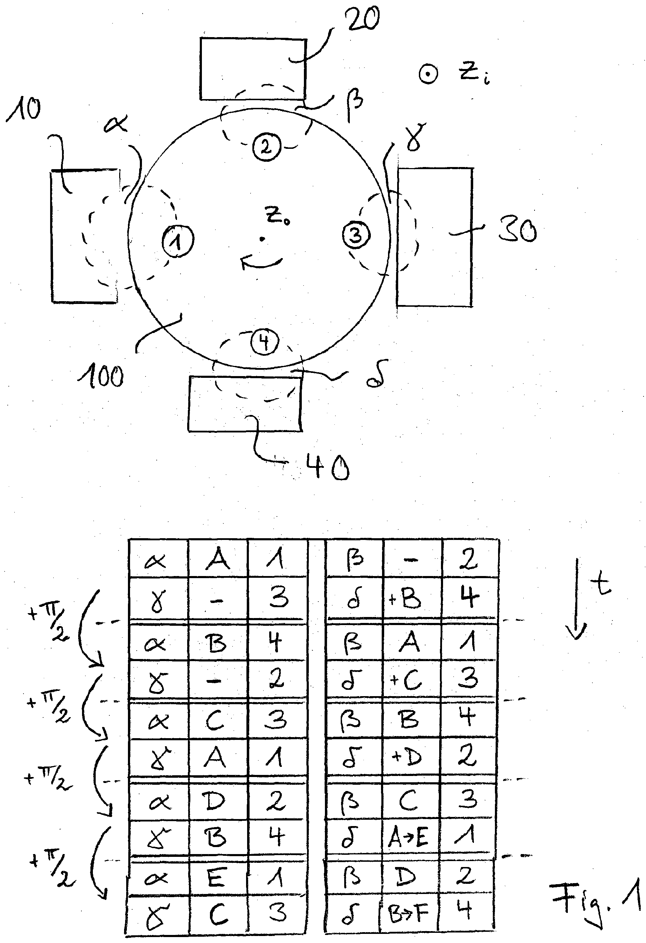

Im oberen Bereich von Fig. 1 ist zunächst in einer schematischen Ansicht von oben ein um seine vertikale Drehachse Z₀ drehbarer Träger 100 dargestellt. Auf dem Träger 100 drehend angetrieben gelagert sind vier Werkstückspindeln 1, 2, 3 und 4, die äquiangular voneinander beabstandet sind. Bei einer Drehung des Trägers 100 um 90° gelangt somit jede einzelne Werkstückspindel an die vorherige Lage der in Drehrichtung gesehen vorauslaufenden Werkzeugspindel. Beispielsweise gelangt die Werkzeugspindel 1 bei Drehung um 90° in der in Fig. 1 eingezeichneten Drehrichtung des Trägers 100 in die vorherige Lage der Werkstückspindelachse 2. Der Träger 100 kann in diesem Ausführungsbeispiel vier Arbeitsstellungen einnehmen, die in Fig. 1 gezeigte Stellung sowie gegenüber dieser Stellung um 90°, 180° und 270° verdrehte Stellungen.

In der in Fig. 1 gezeigten Drehstellung des Trägers 100 ist eine Bearbeitungsposition α gegeben, in welcher ein auf die Werkstückspindel 1 aufgespanntes Werkstück an einer schematisch dargestellten Bearbeitungsstation 10 bearbeitet werden kann. In diesem Ausführungsbeispiel weist die Bearbeitungsstation 10 einen Wälzfräser auf, der nach vorgegebenen Parametern eine Verzahnung an dem aufgespannten Werkstück erzeugen kann. Die Bearbeitungsposition α ist somit der Bearbeitungsstation 10 zugeordnet. An der Bearbeitungsstation 10 ist desweiteren ein Schneidwerkzeug vorgesehen, welches den beim Wälzfräsen entstandenen axialen Materialüberstand an der unteren Stirnseite des Werkstückes entfernt, beispielsweise durch schneidendes Abschälen. Es kann jedoch ein eigens angetriebenes stirnfräsartiges Werkzeug ebenfalls dazu vorgesehen werden. Die Bearbeitungsposition α entspricht in der obigen Darstellung dem dritten Ort.

In einer weiteren Bearbeitungsposition β kann ein in der in Fig. 1 gezeigten Arbeitsstellung des Trägers 100 auf der zweiten Werkstückspindel 2 aufgespanntes Werkstück von einer Bearbeitungsstation 20 bearbeitet werden. Die Bearbeitungsstation 20 weist ein Anfas-Werkzeug, z.B. ein Anfas-Rad auf, mit welchem die Zahnkanten der an dem Bearbeitungsort α erzeugten Verzahnung in eine Fase umgewandelt wird. Dies geschieht durch plastisches Umformen, aufgrund derer sich stirn- und flankenseitige Materialaufwürfe am Werkstück ergeben, die Sekundärgrate.

An einer nochmals weiteren Bearbeitungsposition γ steht eine weitere Bearbeitungsstation 30 bereit, welche das in der in Fig. 1 gezeigten Arbeitsstellung des Trägers 100 auf Werkstückspindel 3 aufgespannte Werkstück bearbeiten kann. Die Bearbeitungseinheit 30 weist ebenfalls einen Wälzfräser auf, welcher in einem Fräsdurchgang die flankenseitigen Materialaufwürfe (Sekundärgrate) beseitigt. Dies kann im Rahmen eines Feinwälzganges erfolgen, bei dem über die gesamte Flanke gegenüber der in der Bearbeitungsposition α erzeugten Verzahnung noch mehr Material abgetragen wird. Es könnte jedoch auch die gleiche Zustellung wie die des Wälzfräsers der Bearbeitungsstation 10 gewählt werden, so dass im wesentlichen lediglich die flankenseitigen Materialaufwürfe beseitigt werden. Desweiteren weist die Bearbeitungsstation 30 in diesem Ausführungsbeispiel noch Schneidwerkzeuge auf, mit welchen die stirnseitigen Materialaufwürfe (Sekundärgrate) entfernt werden. Dies kann wiederum beispielsweise durch einfaches Abschälen erfolgen, oder durch eigens angetriebene stirnfräsartige Schneidwerkzeuge.

In diesem Ausführungsbeispiel ist somit ein Werkstück nach dem Durchlaufen der Bearbeitungsstation α, β und γ hinsichtlich der Weichbearbeitung fertiggestellt und kann nach dem nächsten Wechsel der Arbeitsstellung des Trägers 100 an einem weiteren Ort δ von einem Werkstückwechsler 40 entnommen werden, wonach ein neuer Werkstückrohling auf die am Ort δ befindliche Werkstückspindel (in der Darstellung von Fig. 1 ist dies Werkstückspindel 4) aufgespannt werden kann. In diesem Ausführungsbeispiel findet am Ort ö keine eigentliche Bearbeitung des Werkstückes mehr statt. Die Entfernung der stirnseitigen Materialaufwürfe (Sekundärgrate) könnte jedoch auch von der Bearbeitungsposition γ hin zur Bearbeitungsposition δ verlagert werden.

Der Ort δ entspricht in der obigen Nomenklatur somit dem vierten Ort, während die Bearbeitungsposition β dem ersten Ort und die Bearbeitungsposition γ dem zweiten Ort entspricht.

Der Durchlauf einzelner zu bearbeitender Werkstücke A, B, C, D, E, F durch die (Bearbeitungs)positionen α, β, γ, δ ist in der unteren Hälfte von Fig. 1 schematisch dargestellt. In den ersten zwei Zeilen dieser Darstellung erkennt man, dass ein Werkstück B gerade vom Werkstückwechsler 40 auf die vierte Werkstückspindel 4 aufgebracht wird, während eine Drehung des Tisches 100 um 90° zuvor bereits ein Werkstück A auf die erste Werkstückspindel 1 aufgespannt wurde. Werkstück A befindet sich somit in der Bearbeitungsposition α.

Das Bearbeitungsverfahren wird nun anhand des neu aufgespannten Werkstückes (Werkstückrohlings) B beschrieben, das auf der Werkstückspindel 4 aufgespannt die Bearbeitungspositionen α, β und γ durchlaufen wird. Der Wechsel zwischen den Arbeitsstellungen des Drehträgers 100 sind in der Darstellung von Fig. 1 unten durch die gebogenen Pfeile (+ π/2) dargestellt. Desweiteren ist der Zeitpfeil t in Fig. 1 eingezeichnet, während das Bezugszeichen Zᵢ die vertikale Orientierung der einzelnen Werkstückspindelachsen im oberen Bereich von Fig. 1 anzeigt.

Nach dem nächsten, dem Drehtisch 100 aufgegebenen Takt zur Änderung der Arbeitsstellung mittels Drehung um 90° befindet sich das auf der Werkstückspindel 4 aufgespannte Werkstück B in der Bearbeitungsposition α. Dort wird eine Verzahnung mittels Wälzfräsen erzeugt, desweiteren werden axiale Materialüberstände an der unteren Stirnseite erzeugten Verzahnung entfernt, wie oben beschrieben.

Nach dem erneuten Weitertakten des Drehtisches 100 erreicht das Werkstück B mit der erzeugten Verzahnung in die Bearbeitungsposition β. Dort werden die Zahnkanten der Verzahnung angefast und es entstehen die Sekundärgrate, stirnseitig sowie flankenseitig.

Die weitere Steuerung erfolgt nun so, dass das Werkstück B in die Bearbeitungsposition γ noch mit den vorhandenen stirn- und flankenseitigen Materialaufwürfen (Sekundärgraten) weitergetaktet wird. Somit kann das Weitertakten jedenfalls hinsichtlich des Werkstückes B bereits nach dem Anfasen erfolgen, also deutlich rascher als wenn noch unmittelbar anschließend in der Bearbeitungsposition β eine Sekundärgratentfernung durchgeführt würde. Zugleich wird vermieden, dass durch zum Anfasen paralleles stirnseitiges Sekundärentgraten von der Stirnseite abgeschnittenes kaltverfestigtes Material in die kaltverfestigte teilangefaste Flankenkante eingedrückt wird.

Das Entfernen der stirnseitigen Sekundärgrate wird somit von dem Anfasen selbst entkoppelt und findet wie oben beschrieben in diesem Ausführungsbeispiel an der Bearbeitungsposition γ statt, oder ggf. an der Position ö. In der Bearbeitungsposition γ wird durch die oben beschriebene Bearbeitung durch die Bearbeitungsstation 30 der flankenseitige Sekundärgrat entfernt.

Nach erneutem Weitertakten gelangt das Werkstück B wieder in die Position δ, an welche es ggf. nach Entfernen der stirnseitigen Sekundärgrate, wenn nicht bereits in der Bearbeitungsposition γ geschehen, vom Werkstückwechsler 40 abgenommen und durch einen neuen Werkstückrohling F ersetzt wird.

Desweiteren ist der unteren Hälfte von Fig. 1 zu entnehmen, dass das Werkstück A auf Werkstückspindel 1 vorauslaufend an den jeweiligen Positionen α, β, γ, δ die gleichen Bearbeitungen erfährt wie das soeben hinsichtlich des Verfahrens genauer erläuterte Werkstück B. Desweiteren ist ersichtlich, dass ein Werkstück C dem Werkstück B einen Takt nachlaufend bearbeitet wird, das Werkstück D zwei Takte nachlaufend, usw.. Ein Weitertakten des Drehtisches 100 erfolgt selbstverständlich erst dann, wenn die Bearbeitung an jeder einzelnen Bearbeitungsstation α, β, γ sowie δ (Werkstückwechsel) abgeschlossen ist. Dabei kann ein für die Wälzbearbeitung erforderliches Indexieren (Einmitten) unmittelbar nach dem Werkstückwechsel am Ort δ vorgenommen werden, aber auch während des Taktens des Drehträgers 100 durch eine mitlaufende Indexiereinrichtung, oder aber am Ort α.

Im folgenden wird noch eine weitere Ausführungsart des erfindungsgemäßen Verfahrens erläutert, bei dem man die Orte α und γ einerseits sowie β und δ andererseits zusammenfallen lässt. Bei dieser Ausgestaltung weist der Drehtisch 100 zwei Werkstückspindeln 1, 2 auf, deren Lagen durch Drehung des Drehtisches 100 um 180° jeweils ineinander übergehen. Die Bezugszeichen der Stationen 10, 20 und 40 sind die gleichen wie in Fig. 1 beschrieben. Bearbeitungsstation 10 leistet, was zuvor die Bearbeitungsstationen 10 und 30 geleistet haben, jedenfalls im Hinblick auf die Flankenbearbeitung des Werkstückes.

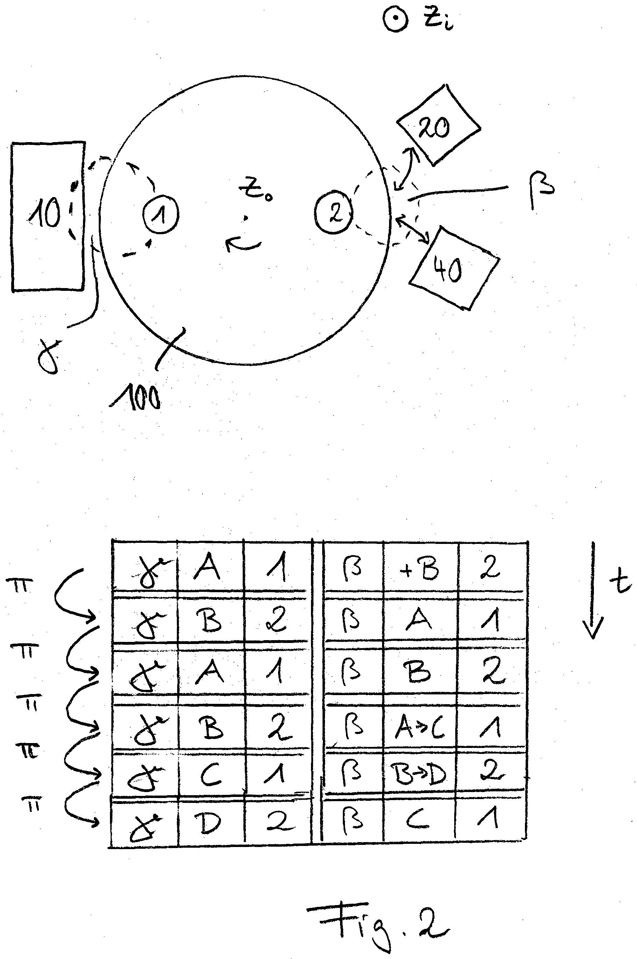

Wie anhand der unteren Hälfte von Fig. 2 zu erkennen ist, können nunmehr nur noch zwei Werkstücke A, B gleichzeitig bearbeitet werden. Das auf die Werkstückspindel 2 aufgespannte Werkstück B wird für das Erzeugen seiner Verzahnung ein erstes Mal in die Bearbeitungsposition γ getaktet, danach zur Erzeugung der Fase an den Zahnkanten in die Bearbeitungsposition β zurückgetaktet, und mit noch vorhandenen stirnseitigen und flankenseitigen Sekundärgraten wieder in die Bearbeitungsposition α getaktet, in der die flankenseitigen Materialaufwürfe (Sekundärgrate) in diesem Ausführungsbeispiel ebenfalls durch Wälzfräsen beseitigt werden (Feinfräsgang). Hinsichtlich der Entfernung der stirnseitigen Sekundärgrate können nun zwei unterschiedliche Optionen gewählt werden. Zum einen könnte die Bearbeitungsstation 10 entsprechende schälende Schneidwerkzeuge aufweisen, oder auch dazu geeignete angetriebene stirnfräsartige Werkzeuge. Gegebenenfalls muss dazu die Werkzeugträgeranordnung konstruktiv etwas massiver ausgelegt werden, um den nötigen Raum für diese stirnschneidenden ohne Stabilitäts- und Steifigkeitsverlust Werkzeuge zu schaffen. Dafür erhält man bei dieser Variante allerdings den Vorteil von nur in der Bearbeitungsposition γ anfallenden Spänen und muss hinsichtlich der Späne an der Bearbeitungsposition β keine weiteren aufwendigen Vorkehrungen treffen.

In einer anderen Gestaltung könnte man die Werkzeuge zur Entfernung der stirnseitigen Sekundärgrate auch der Bearbeitungsstation 20 zuweisen und die stirnseitigen Sekundärgrate nach der zweiten Rückkehr des Werkstückes in die Bearbeitungsposition β, also vor der Werkstückentnahme vornehmen. Wiederum besteht keine Gefahr, dass kaltverfestigtes Material, welches beim Entfernen der stirnseitigen Sekundärgrate abgetragen wird, durch den Anfas-Prozess wieder in die Zahnkanten eingedrückt wird, da durch die Steuerung zwangsweise ein Positionswechsel des angefasten, aber die Sekundärgrate noch aufweisenden Werkstückes erfolgt.

Im oberen Bereich von Fig. 2 wird noch angedeutet, dass die Anfaseinrichtung (und ggf. vorgesehene Einrichtung zur stirnseitigen Sekundärgratentfernung) in den Bearbeitungsbereich der Bearbeitungsposition β hinein- und hinausbewegt werden kann, während die Werkstückwechseleinrichtung 40 ebenfalls in diesen Bereich hinein- und hinausgefahren werden kann, so dass sich diese Einrichtungen bei ihrer wechselseitigen Operation nicht im Wege stehen.

Ein weiterer Vorteil der in Fig. 2 beschriebenen Variante ist, dass vorrichtungstechnisch auch eine einstufige flankenseitig generierende Bearbeitung der Werkstücke möglich ist. Bei dieser Variante erfolgt nach dem ersten Fräsen in der Bearbeitungsposition γ (Vollfräsen) und dem nachfolgenden Anfasen keine weitere Bearbeitung des Werkstückes in der Bearbeitungsposition γ mehr. Vielmehr durchläuft es diese Bearbeitungsposition nur einmal und wird nach Anfasen und ggf. Sekundärgratentfernung vom Werkstückwechsler 40 abgenommen. Die Bearbeitungsstation 20 könnte in diesem Fall funktional erweitert werden, um auch flankenseitige Sekundärgrate zu entfernen, sofern dies nicht einer nochmals weiteren, nicht gezeigten Bearbeitungsstation überlassen wird.

Eine solche, zur Ausführung des erfindungsgemäßen Verfahrens geeignete Vorrichtung ist somit vielseitiger verwendbar, weil sie zusätzlich, wenn gewünscht, einstufiges Fräsen erlaubt. Zudem wird eine gute Kombination aus geringen Gesamtbearbeitungszeiten und Qualität der Verzahnung erreicht, da beim zweistufigen Fräsen (Vorfräsen - Anfasen - Feinfräsen) das Werkstück noch mit vorhandenen Sekundärgraten durch Drehung des Drehträgers 100 aus der Anfasposition β in die Fräsposition γ getaktet wird.

## Patentansprüche

1. Verfahren zum Bearbeiten eines Werkstücks (A, B, C, D, E, F), bei dem eine endseitige Zahnkante einer durch in spanabhebender Bearbeitung erzeugten Verzahnung des Werkstücks durch plastisches Umformen an einem ersten Ort (β) in eine Fase umgearbeitet wird, wobei durch das bei der Umarbeitung zur Stirnseite der Verzahnung hin verdrängte Material ein stirnseitiger Materialaufwurf und durch das zur Zahnflanke der Verzahnung hin verdrängte Material ein flankenseitiger Materialaufwurf entsteht, und bei dem man den entstandenen stirnseitigen und flankenseitigen Materialaufwurf beseitigt,
**dadurch gekennzeichnet, dass** man das den stirnseitigen Materialaufwurf noch aufweisende Werkstück einen Ortswechsel zu einem zweiten Ort (γ) hin erfahren lässt, an dem die Beseitigung des flankenseitigen Materialaufwurfs erfolgt.

2. Verfahren nach Anspruch 1, bei dem die Beseitigung des flankenseitigen Materialaufwurfs durch spanenden Bearbeitungseingriff eines Bearbeitungswerkzeuges erfolgt.

3. Verfahren nach Anspruch 1 oder 2, bei dem die Erzeugung der Verzahnung mit der umzuarbeitenden Zahnkante an einem dritten Ort (α) erfolgt, der insbesondere mit dem zweiten Ort (γ) übereinstimmt.

4. Verfahren nach einem der vorhergehenden Ansprüche, bei dem die Erzeugung der Verzahnung mit der umzuarbeitenden Zahnkante durch spanenden Bearbeitungseingriff insbesondere der gleichen Art wie der des Bearbeitungseingriffes zur Beseitigung des flankenseitigen Materialaufwurfs und insbesondere mit dem gleichen Bearbeitungswerkzeug erfolgt.

5. Verfahren nach Anspruch 3 oder 4, bei dem die Zustelltiefe bei der Beseitung des flankenseitigen Materialaufwurfs gleich der tiefsten Zustellung bei der Erzeugung der Verzahnung mit der zu bearbeitenden Zahnkante eingestellt wird.

6. Verfahren nach Anspruch 3 oder 4, bei dem die Zustelltiefe bei der Beseitung des flankenseitigen Materialaufwurfs tiefer als die tiefste Zustellung bei der Erzeugung der Verzahnung mit der zu bearbeitenden Zahnkante eingestellt wird.

7. Verfahren nach einem der Ansprüche 3 bis 6, bei dem man die Verzahnung mit der umzuarbeitenden Zahnkante durch Wälzfräsen erzeugt.

8. Verfahren nach einem der vorhergehenden Ansprüche, bei dem wenigstens an einer Stirnseite der erzeugten Verzahnung noch vor der Umarbeitung der Zahnkante und insbesondere am dritten Ort (α; γ) Material abgenommen wird, insbesondere schneidend abgeschält wird oder durch einen angetriebenen Stirnfräser abgetragen wird.

9. Verfahren nach einem der vorhergehenden Ansprüche, bei dem die Beseitigung des stirnseitigen Materialaufwurfes wenigstens an einer Stirnseite an dem zweiten Ort (γ) erfolgt, insbesondere durch schneidendes Abschälen oder durch ein angetriebenes stirnfräserartiges Schneidwerkzeug.

10. Verfahren nach einem der vorhergehenden Ansprüche, bei dem man das Werkstück mit dem beseitigten flankenseitigen Materialaufwurf einen Ortswechsel hin zu einem vierten Ort (δ) erfahren lässt, an dem das Werkstück entnommen wird und der insbesondere mit dem ersten Ort (β) übereinstimmt.

11. Verfahren nach Anspruch 10, bei dem die Beseitigung des stirnseitigen Materialaufwurfes wenigstens an einer Stirnseite, insbesondere beiden Stirnseiten an dem vierten Ort (δ) erfolgt, insbesondere als letzte Bearbeitung vor der Werkstückentnahme und insbesondere durch schneidendes Abschälen oder durch ein angetriebenes stirnfräserartiges Werkzeug.

12. Verfahren nach einem der vorhergehenden Ansprüche, bei dem parallel zur Umarbeitung der Zahnkante des Werkstückes an einem weiteren Werkstück eine Verzahnung mit umzuarbeitender Zahnkante an dem dritten Ort (α) erzeugt wird.

13. Verfahren nach Anspruch 12, bei dem an dem weiteren Werkstück insbesondere an den gleichen Orten (α, β, γ, δ; γ, β) zeitversetzt die gleichen Bearbeitungsschritte durchgeführt werden wie bei dem Werkstück, und insbesondere ein nochmals weiteres Werkstück an dem vierten Ort (δ; β) der Bearbeitung zugeführt wird, während das weitere Werkstück an dem zweiten Ort (γ) ist.

14. Verfahren nach einem der Ansprüche 10 bis 13, bei dem der vierte Ort (δ) mit dem ersten Ort (β) zusammenfällt und sich ein von einer der Werkstückentnahme und/oder Zuführung eines neuen Werkstückes dienenden Einrichtung genutzter Raum mit dem von einer dem Beseitigen stirnseitiger Materialaufwürfe dienenden Einrichtung genutzten Raum überlappen.

15. Verzahnungsmaschine zum Erzeugen und/oder Bearbeiten von Verzahnungen, mit einem zwischen wenigstens zwei Stellungen beweglichen Träger (100) für wenigstens eine darauf drehend antreibbar gelagerten Werkstückspindel (1, 2, 3, 4; 1, 2),
einer Einrichtung zum Umarbeiten einer endseitigen Zahnkante der Verzahnung eines auf der Werkstückspindel aufgespannten und an einem durch eine von dem Träger (100) eingenommene Stellung definierten Ort (β) angeordneten Werkstückes, und
einer wenigstens die Bewegung des Trägers steuernden Steuervorrichtung,
**dadurch gekennzeichnet, dass** die Steuervorrichtung den Träger (100) zur Bewegung in eine andere Stellung steuert, wenn das Werkstück noch den bei der Umarbeitung durch Materialverdrängung zur Stirnfläche der Verzahnung hin entstandenen stirnseitigen Materialaufwurf aufweist.

16. Verzahnungsmaschine nach Anspruch 15, die weiter aufweist eine drehend angetriebene Werkzeugspindel zur Aufnahme eines Bearbeitungswerkzeugs, insbesondere eines Wälzfräsers, zur spanenden Erzeugung der Verzahnung an dem aufgespannten, an einem durch eine/die andere von dem Träger eingenommene Stellung definierten Ort (α; γ) angeordneten Werkstückes.

17. Verzahnungsmaschine nach Anspruch 15 oder 16, die weiter aufweist eine Einrichtung zur Materialabnahme, insbesondere in Form eines nicht angetriebenen Abschälwerkzeuges oder eines angetriebenen stirnfräserartigen Werkzeuges, von wenigstens einer, insbesondere beiden Stirnseiten der Verzahnung an dem durch die eine und/oder die andere Trägerstellung bestimmten Ort.

18. Verzahnungsmaschine nach einem der Ansprüche 15 bis 17, die wenigstens eine weitere (2, 3, 4; 2) auf dem Träger drehbar antreibbar gelagerte Werkstückspindel aufweist, wobei von zwei auf zwei Spindeln aufgespannten Werkstücken eines an einem ersten und das andere an einem zweiten Ort (γ) angeordnet ist, und ein Positionstausch (A↔B) beider Werkstücke durch eine Trägerbewegung, insbesondere -drehung bewirkbar ist.

19. Verzahnungsmaschine nach einem der Ansprüche 15 bis 18, deren Steuervorrichtung die Maschine zur Durchführung eines Verfahrens nach einem der Ansprüche 1 bis 14 steuert.

## Claims

1. A method of machining a workpiece (A, B, C, D, E, F) wherein a tooth edge at the end of toothing of the workpiece generated by a chip-removing machining process is reworked into a chamfer by plastic re-shaping at a first location (β), the material displaced towards the face side of the toothing by the re-working giving rise to a material protrusion on the face side, and the material displaced towards the tooth flank of the toothing giving rise to a material protrusion on the flank side, and wherein the material protrusion produced on the face side and on the flank side is removed,
**characterised in that** the workpiece which still has the material protrusion on the face side is moved to a second location (γ) at which the removal of the material protrusion on the flank side takes place.

2. The method according to Claim 1, wherein the removal of the material protrusion on the flank side takes place by means of a chip-cutting intervention of a machining tool.

3. The method according to Claim 1 or 2, wherein the generation of the toothing with the tooth edge that is to be reworked takes place at a third location (α) that coincides in particular with the second location (γ).

4. The method according to any of the preceding claims, wherein the generation of the toothing with the tooth edge that is to be reworked by means of a chip-cutting intervention takes place in particular in the same way as the machining intervention for removing the material protrusion on the flank side and in particular with the same machining tool.

5. The method according to Claim 3 or 4, wherein the infeed depth for the removal of the material protrusion on the flank side is set equal to the deepest infeed used in the generation of the toothing with the tooth edge that is to be machined.

6. The method according to Claim 3 or 4, wherein the infeed depth for the removal of the material protrusion on the flank side is set deeper than the deepest infeed used in the generation of the toothing with the tooth edge that is to be machined.

7. The method according to any of Claims 3 to 6, wherein the toothing with the tooth edge that is to be reworked is generated by hobbing.

8. The method according to any of the preceding claims, wherein, still prior to the reworking of the tooth edge and in particular at the third location (α; γ), material is removed at least from a face side of the toothing that has been generated, in particular shaved off with a cutting tool or removed with a driven face-milling cutter.

9. The method according to any of the preceding claims, wherein the removal of the material protrusion on the face side takes place at least on a face side at the second location (γ), in particular by shaving off with a cutting tool or by removing it with a driven face-milling cutter.

10. The method according to any of the preceding claims, wherein the workpiece from which the material protrusion on the flank side has been removed is moved to a fourth location (δ) at which the workpiece is taken out and which coincides in particular with the first location (β).

11. The method according to Claim 10, wherein the removal of the material protrusion on the face side takes place at least on a face side, in particular both face sides, at the fourth location (δ), in particular as the final machining before taking out the workpiece, and in particular by shaving with a cutting tool or by a driven face-milling cutter.

12. The method according to any of the preceding claims, wherein parallel to the reworking of the tooth edge of the workpiece, toothing on another workpiece with a tooth edge that is to be reworked is generated at the third location (α).

13. The method according to Claim 12, wherein the same processing steps are performed on the further workpiece with a time shift and in particular at the same locations (α, β, γ, δ; γ, β) as on the workpiece, and in particular yet a further workpiece is subjected to processing at the fourth location (δ;β) while the further workpiece is at the second location (γ).

14. The method according to any of Claims 10 to 13, wherein the fourth location (δ) coincides with the first location (β) and a space used by a device serving to take out the workpiece and/or to set a new workpiece in place overlaps with the space used by a device serving to remove material protrusions on the face side.

15. A gear cutting machine for generating and/or machining toothing, comprising a carrier (100) that can be moved between at least two positions for at least one rotatably driven workpiece spindle (1, 2, 3, 4; 1, 2) mounted on the latter,
a device for reworking a tooth edge at the end of the toothing of a workpiece that is clamped to the workpiece spindle and is arranged at a location (β) defined by a position assumed by the carrier (100), and
a control device controlling at least the movement of the carrier,
**characterised in that** the control device directs the carrier (100) to move to another position when the workpiece still has the material protrusion at the face side resulting from material being displaced towards the face surface of the toothing during the reworking.

16. The gear cutting machine according to Claim 15, that further comprises a rotatably driven tool spindle for holding a machining tool, in particular a hobcutter, for machining the toothing on the clamped workpiece arranged at a location (α; γ) defined by a position assumed by a/the other carrier.

17. The gear cutting machine according to Claim 15 or 16, that further comprises a device for removing material, in particular in the form of a nondriven shaving tool or a driven tool of the face-milling cutter type, from at least one, in particular both face sides of the toothing at the location determined by one and/or the other carrier position.

18. The gear cutting machine according to any of Claims 15 to 17, that has at least one further workpiece spindle (2, 3, 4; 2) mounted on the carrier such as to be driven rotatably, of two workpieces that are clamped on two spindles, one being arranged at a first and the other at a second location (γ), and a position exchange (A↔B) of the two workpieces being able to be brought about by a movement of the carrier, in particular a rotation of the carrier.

19. The gear cutting machine according to any of Claims 15 to 18, the control device of which controls the machine in order to carry out a method according to any of Claims 1 to 14.

## Revendications

1. Procédé pour usiner une pièce (A, B, C, D, E, F), dans lequel une arête terminale d'une dent appartenant à une denture de la pièce, générée par usinage avec enlèvement de copeaux, est transformée plastiquement en un chanfrein en un premier emplacement (β), la matière repoussée vers la face frontale de la denture lors de la transformation formant une élévation de matière côté frontal et la matière repoussée vers le flanc de la denture formant une élévation de matière côté flanc, lesdites élévations de matière côté frontal et côté flanc ainsi formées subissant une élimination,
**caractérisé en ce que** l'on fait opérer un changement d'emplacement à la pièce présentant toujours l'élévation de matière côté frontal, celle-ci venant prendre un deuxième emplacement (γ) au niveau duquel on effectue l'élimination de l'élévation de matière côté flanc.

2. Procédé selon la revendication 1, dans lequel l'élimination de l'élévation de matière côté flanc s'effectue par contact d'usinage avec enlèvement de copeaux au moyen d'un outil d'usinage.

3. Procédé selon la revendication 1 ou 2, dans lequel la génération de la denture présentant l'arête de dent à transformer s'effectue en un troisième emplacement (α) correspondant notamment au deuxième emplacement (γ).

4. Procédé selon l'une des revendications précédentes, dans lequel la génération de la denture présentant l'arête de dent à transformer s'effectue par contact d'usinage avec enlèvement de copeaux, notamment du même type que le contact d'usinage visant à éliminer l'élévation de matière côté flanc et notamment au moyen du même outil d'usinage.

5. Procédé selon la revendication 3 ou 4, dans lequel la profondeur de passe mise en oeuvre lors de l'élimination de l'élévation de matière côté flanc est identique à la passe la plus profonde mise en oeuvre lors de la génération de la denture présentant l'arête de dent à usiner.

6. Procédé selon la revendication 3 ou 4, dans lequel la profondeur de passe mise en oeuvre lors de l'élimination de l'élévation de matière côté flanc est supérieure à la passe la plus profonde mise en oeuvre lors de la génération de la denture présentant l'arête de dent à usiner.

7. Procédé selon l'une des revendications 3 à 6, dans lequel on génère par taillage par fraise-mère la denture présentant l'arête de dent à transformer.

8. Procédé selon l'une des revendications précédentes, dans lequel de la matière est enlevée au moins sur une face frontale de la denture générée avant même la transformation de l'arête de dent et notamment au niveau du troisième emplacement (α ; γ), notamment par rabotage ou au moyen d'une fraise en bout entraînée.

9. Procédé selon l'une des revendications précédentes, dans lequel l'élimination de l'élévation de matière côté frontal s'effectue au moins sur une face frontale, au niveau du deuxième emplacement (γ), notamment par rabotage ou au moyen d'un outil de coupe entraîné semblable à une fraise en bout.

10. Procédé selon l'une des revendications précédentes, dans lequel on fait opérer un changement d'emplacement à la pièce présentant l'élévation de matière côté flanc à éliminer, celle-ci venant prendre un quatrième emplacement (δ) au niveau duquel la pièce est retirée et qui correspond notamment au premier emplacement (β).

11. Procédé selon la revendication 10, dans lequel l'élimination de l'élévation de matière côté frontal s'effectue au moins sur une face frontale, notamment sur les deux faces frontales au niveau du quatrième emplacement (δ), notamment en tant qu'usinage ultime avant le retrait de la pièce et notamment par rabotage ou au moyen d'un outil entraîné semblable à une fraise en bout.

12. Procédé selon l'une des revendications précédentes, dans lequel, parallèlement à la transformation de l'arête de dent de la pièce, on génère une denture présentant une arête de dent à transformer sur une autre pièce au niveau du troisième emplacement (α).

13. Procédé selon la revendication 12, dans lequel des étapes d'usinage semblables à celles réalisées sur ladite une pièce sont menées de manière différée dans le temps sur ladite autre pièce, notamment aux mêmes emplacements (α, β, γ, δ ; γ, β), une pièce encore supplémentaire étant notamment introduite dans le processus d'usinage au niveau du quatrième emplacement (δ ; β) tandis que ladite autre pièce se situe au deuxième emplacement (γ).

14. Procédé selon l'une des revendications 10 à 13, dans lequel le quatrième emplacement (δ) coïncide avec le premier emplacement (β) et l'espace nécessaire à un dispositif servant au retrait de la pièce et/ou à l'introduction d'une nouvelle pièce est en chevauchement avec l'espace nécessaire à un dispositif servant à l'élimination des élévations de matière côté frontal.

15. Machine à tailler les engrenages permettant de générer et/ou d'usiner des engrenages, comportant :
un support (100) mobile entre au moins deux positions et destiné à supporter en rotation au moins une broche porte-pièce (1, 2, 3, 4 ; 1, 2),
un dispositif de transformation d'une arête terminale d'une dent appartenant à la denture d'une pièce à usiner mise en place sur la broche porte-pièce en un emplacement (β) défini par une position prise par le support (100), et
un dispositif de commande qui commande au moins le mouvement du support,
**caractérisée en ce que** le dispositif de commande effectue une commande du support (100) pour qu'il puisse passer à une autre position lorsque la pièce présente encore l'élévation de matière côté frontal produite lors de la transformation sous l'effet de la matière repoussée vers la surface frontale de la denture.

16. Machine à tailler les engrenages selon la revendication 15, présentant en outre une broche porte-outil entraînée en rotation et destinée à recevoir un outil d'usinage, notamment une fraise-mère, pour une génération de la denture avec enlèvement de copeaux sur la pièce à usiner mise en place sur la broche en un emplacement (α ; γ) défini par une/l'autre position prise par le support.

17. Machine à tailler les engrenages selon la revendication 15 ou 16, présentant en outre un dispositif d'enlèvement de matière, notamment sous la forme d'un outil de rabotage non entraîné ou d'un outil entraîné semblable à une fraise en bout, sur au moins une, notamment sur les deux faces frontales de la denture au niveau de l'emplacement déterminé par l'une et/ou l'autre des positions du support.

18. Machine à tailler les engrenages selon l'une des revendications 15 à 17, présentant au moins une autre broche porte-pièce (2, 3, 4 ; 2) entraînée en rotation sur le support, dans laquelle, sur deux pièces à usiner mises en place sur deux broches, l'une est disposée en un premier emplacement et l'autre en un deuxième emplacement (γ), un échange de position (A↔B) des deux pièces pouvant être opéré sous l'effet d'un mouvement du support, notamment d'une rotation de celui-ci.

19. Machine à tailler les engrenages selon l'une des revendications 15 à 18, dont le dispositif de commande effectue la commande de la machine afin de mettre en oeuvre un procédé selon l'une des revendications 1 à 14.
